# EUROPEAN PATENT SPECIFICATION

(11) **EP 2 764 983 B1**
(45) Date of publication and mention of the grant of the patent: **23.11.2022**
(21) Application number: 14154438.7
(22) Date of filing: 10.02.2014
(51) Int. Cl.: B29D 11/00

(54) **Methods and apparatus useful in the manufacture of contact lenses**
Verfahren und Vorrichtung zur Herstellung von Kontaktlinsen
Procédés et appareil utiles dans la fabrication de lentilles de contact

(30) Priority: 12.02.2013 US 201361763717 P
(43) Date of publication of application: 13.08.2014
(73) Proprietor: CooperVision International Limited, Fareham PO15 5RL (GB)
(72) Inventor: Bruce, Ian, Eastleigh, Hampshire, SO53 4LY (GB)
(74) Representative: Abel & Imray LLP

(56) References cited:
- EP-A2- 0 182 659
- US-A- 5 319 007
- US-A1- 2007 138 692
- US-A1- 2008 257 389

## Description

The present application claims the benefit of U.S. Provisional Application Serial No. 61/763,717, filed February 12, 2013.

The present disclosure generally relates to the manufacture of ophthalmic devices, and more specifically relates to apparatus and methods for demolding contact lens molds, delensing contact lenses from mold sections, and related apparatus and methods of using such related apparatus.

### Background

As the ophthalmic device industry has grown, manufacturing methods and apparatus needed to produce high quality ophthalmic devices in a cost-effective and highly efficient manner have grown as well.

It is current practice in the art of making ophthalmic devices, for example, contact lenses, such as soft contact lenses of the hydrogel type, to form a monomer or monomer mixture that may be polymerized in a plastic mold. Details of typical direct mold processes for forming soft hydrogel contact lenses can be found in U.S. Patent Nos. 5,080,839, 5,039,459, 4,889,664, and 4,495,313.

The process for forming ophthalmic devices such as soft contact lenses as generally described in the above-mentioned patents includes the steps of providing a monomer or mixture of monomers, in a mold assembly including two mold sections with an ophthalmic device-shaped (e.g., lens-shaped) cavity therebetween. The monomer/monomer mixture is placed in the cavity. Next, the mold assembly including the monomer/monomer mixture is subjected to conditions whereby the monomer(s) polymerize, to thereby produce a polymerized ophthalmic device in the shape of the cavity.

Typical processes for separating the mold sections of the mold assembly and removing the polymerized device therefrom include, for example, a demolding step in which the mold sections of the mold assembly are separated, and a deblocking or delensing step in which the ophthalmic device is separated from the one mold section to which it remains attached to or in contact with following the demolding step.

During the delensing step, the device and the mold section to which it is attached can be contacted with a liquid, for example, a soaking liquid, for example, at a somewhat elevated temperature, for the purpose of facilitating separation or release of the device from the mold section. This contacting often occurs on a large scale, in particular, a large number of device/mold section combinations, for example, on the order of about 100 or about 1000 or more at a time, can be contacted with liquid at the same time.

This contacting of multiple lens-mold section combinations can be automated, at least to some extent. For example, a support structure or a matrix of support structures may be provided. The support structure or structures can be permanently attached to the tank, or can be removable. The support structure (s) may be positioned near the top of a tank, e.g., a soak tank, including a liquid, e.g., a soaking liquid. A robot can load the support structure(s) with a plurality of items such as device/mold section combinations, for example, each such combination including a female mold section and a device, such as an unhydrated, soft contact lens or lens product. The liquid can be heated, or maintained at or above ambient temperature using one or more heating elements in the tank. After a period of time in contact with the liquid, the device/mold section combinations can be removed, or both the device and the mold section can be removed at the same time, or the devices and the mold sections can be removed separately, for example, by a robot, from the support structure(s). The devices may have separated from the mold sections while in the tank, or may be easily separated from the mold sections after removal of the device/mold section combinations from the tank, for example, using a vacuum apparatus, and the devices can be sent for further processing, such as washing or extraction or hydration or packaging, or any combination thereof.

Problems can be caused in this step by bubbles or convection currents or both which are created by the elements present in the tank, such as heating elements or cooling elements. These bubbles, or convection currents, or both can contact the devices or device/mold section combinations or deblocked mold sections with sufficient force to displace them from the support structure(s) in the tank, so that the displaced items are caused to float around in or sink in the tank. Such displaced ophthalmic devices can be lost, and the tank may need to be emptied in order to retrieve the device/mold section combinations or deblocked mold sections. In addition, even if the devices or device/mold section combinations or deblocked mold sections are only slightly displaced on the support structure(s), the displacement may be sufficient such that a robot may not be able to pick up the items from the support structure(s). Thus, even displacing the items on the support structure(s) by a small amount can cause significant processing disruptions.

There is a need to address this problem as well as other problems and concerns in order to provide more effective or efficient manufacture of ophthalmic devices, for example, contact lenses, such as soft contact lenses.

US patent No. 5,319,007 describes optical plastics and methods for making the same, including a liquid bath curing system employing a pressurized casting system.

US2008/0257389 A1 describes a biomedical device carrier which includes multiple recesses for holding a plurality of polymerized biomedical devices such as polymerized ophthalmic lenses, during an extraction procedure. A biomedical device extraction assembly includes multiple biomedical device carriers. The structure of the individual carriers and the arrangement of carriers in the assembly is said to provide sufficient extraction of an extractable component from the biomedical devices using relatively small amounts of extraction media per biomedical device. Methods of extracting biomedical devices include providing polymerized biomedical devices in the carriers and assembles, and contacting the devices with an extraction composition.

### Summary

In a first aspect there is provided a method of manufacturing an ophthalmic device in accordance with claim 1 below. In a second aspect there is provided an apparatus in accordance with claim 5 below. Optional but preferred features are set out in the dependent claims.

Methods and apparatus useful for manufacturing ophthalmic devices, for example, cast molded ophthalmic lenses, including cast molded soft hydrogel contact lenses, are described herein. The present methods and apparatus are effective in the manufacture of ophthalmic devices, for example, delensing ophthalmic devices from ophthalmic device/mold section combinations, or otherwise treating ophthalmic devices, or ophthalmic device/mold section combinations, or mold sections, or mold assemblies, or any combination thereof. Components and/or elements of the present methods and apparatus are also described herein.

The present disclosure relates to methods of manufacturing a contact lens, such as a soft hydrogel contact lens. The present methods may comprise providing a plurality of cast-molded polymerized ophthalmic devices, such as cast-molded contact lens products; placing the ophthalmic devices or the ophthalmic device/mold section combinations in a liquid in a tank, the tank including at least one element which produces bubbles, or produces convection currents, or produces both bubbles and convection currents in the liquid during use of the tank. The method further comprises providing at least one baffle in the tank, wherein the at least one baffle is at least partially submerged in the liquid in the tank and is effective, for example, is positioned or is structured or is both positioned and structured to be effective, in preventing at least a portion of the bubbles from contacting the ophthalmic devices, or the ophthalmic device/mold section combinations located in the liquid in the tank. Alternatively, the method can be effective in reducing the force with which at least a portion of the convection currents or bubbles or both produced in the liquid contact the ophthalmic devices, or the ophthalmic device/mold section combinations present in the liquid in the tank. In another example, the method can be effective in both preventing bubbles from contacting the items in the tank and in reducing the force with which a portion of the convection currents or bubbles or both produced in the tank contact the items in the tank. The method can further comprise treating the ophthalmic devices, or the ophthalmic device/mold section combinations in the tank to produce treated ophthalmic devices or treated ophthalmic device/mold section combinations. The method can yet further comprise removing the ophthalmic devices, or the ophthalmic device/mold section combinations, or the treated ophthalmic devices, or the treated ophthalmic device/mold section combinations from the tank. In one example, the ophthalmic devices or ophthalmic device/mold section combinations can be present on a support structure when placed within the tank or when treated in the tank or when removed from the tank, or any combination thereof. In another example, the ophthalmic devices or ophthalmic device/mold section combinations can be present in trays when placed on a support structure within the tank or when treated in the tank or when removed from the tank, or any combination thereof.

In one example, the number of acceptable treated ophthalmic devices or treated device/mold section combinations obtained employing a method in accordance with the present disclosure is greater than a number of acceptable treated ophthalmic devices or treated device/mold section combinations obtained using an identical method in which the at least one baffle is absent from the tank. In one example, the number of acceptable treated items obtained may be greater than the number of acceptable items obtained using an identical method in which the at least one baffle is absent from the tank.

In one example, the ophthalmic devices or device/mold section combinations are present on a support in the tank, and the baffle is effective in at least reducing a number of ophthalmic devices or device/mold section combinations which are moved relative to their initial position on the support by the bubbles or convection currents or both during the treating, for example, relative to using an identical method in which the at least one baffle is absent from the tank.

The at least one element may comprise a heating element. In one example, one or more ultrasonic energy elements can also be present in the tank.

In one example, each of the ophthalmic devices, when initially placed in the tank, is attached to or held to at least one mold section used in cast molding the ophthalmic device.

The treating in the tank may be effective in releasing, or to release, one or more of the ophthalmic devices present in the tank from attachment to the at least one mold section used in cast molding the ophthalmic device. In one example, the treating may comprise washing the ophthalmic devices or device/mold section combinations to remove unwanted material such as dust or debris from the items. In another example, the treating may comprise extracting the ophthalmic devices or device/mold section combinations to remove extractable materials from the items. In another example, the treating may comprise hydrating the ophthalmic devices or device/mold section combinations, for example to swell them with water or an aqueous solution. In another example, the treating may comprise a process of applying an additional agent, such as, for example, a linking agent or a wetting agent or a therapeutic agent, or any combination thereof, to the ophthalmic devices or the device/mold section combinations. The ophthalmic devices or device/mold section combinations can be in a wet or dry state when the treatment is applied. In yet another example, the treating can comprise washing, or extracting, or hydrating, or applying an additional agent to, or any combination thereof, the ophthalmic devices or device/mold section combinations.

Apparatus for treatment of ophthalmic devices are provided in accordance with the present disclosure.

In one example, such an apparatus comprises a tank; a liquid in the tank; a plurality of cast-molded polymerized ophthalmic devices in the liquid in the tank; at least one element structured to provide energy to the liquid in the tank, wherein the at least one element produces bubbles or produces convection currents or produces both bubbles and convection currents in the liquid in the tank during use of the tank; and at least one baffle structured and located with respect to the tank and to the at least one element (a) to prevent at least a portion of the bubbles in the tank from contacting the ophthalmic devices or device/mold section combinations, or (b) to reduce the force with which at least a portion of the convection currents in the tank contact the ophthalmic devices or device/mold section combinations, or both (a) and (b).

The at least one element may comprise a heating element. In one example, one or more ultrasonic energy elements can also be present in the tank.

The apparatus may further comprise a support or support structure located in the tank and structured to carry the plurality of cast-molded polymerized ophthalmic devices or device/mold section combinations.

The at least one baffle may be structured and positioned to reduce a number of the ophthalmic devices or device/mold section combinations carried by the support or support structure which are moved relative to the support or support structure during use of the tank. In one example, the at least one baffle may be structured and positioned to reduce a number of the plurality of items carried by the support which are moved relative to the support during use.

In one example, the at least one baffle is attached to at least one side of the tank.

The at least one baffle may comprise a plurality of baffles, for example, two baffles or more than two baffles, with each of the baffles being attached to an opposing side of the tank. Including a plurality of baffles may provide added advantages in apparatus including a plurality of elements, for example, a plurality of heating elements or an apparatus comprising at least one heating element in which at least one ultrasonic energy element is also present in the tank.

The at least one baffle may be structured and positioned to be effective (a) in preventing at least a portion of the bubbles produced by the at least one element from contacting the ophthalmic devices or device/mold section combinations in the liquid in the tank, (b) in redirecting the bubbles to a portion of the tank where no ophthalmic devices or device/mold section combinations are located, or c) in reducing the force with which at least a portion of the bubbles, or convection currents, or both in the tank contact the plurality of ophthalmic devices or device/mold section combinations; or any combination of (a) and (b) and (c).

In one example, the at least one baffle is positioned in the tank at an acute angle relative of a top surface of the liquid in the tank. The angular positioning of the baffle or baffles may be useful in dissipating the bubbles or removing the bubbles from the tank, or both, without interfering with the ophthalmic devices or device/mold section combinations in the tank, for example, in the liquid in the tank.

In one example, the tank includes at least one assembly, for example, a weir assembly, which is structured and positioned relative to the at least one baffle to facilitate removal of the bubbles from the tank without interfering with the ophthalmic devices in the liquid in the tank. A separate such assembly, for example, weir assembly, may be present for each baffle.

The at least one baffle may have a first end located farther below the top surface of the liquid in a tank than a second end of the at least one baffle. In one example, the first end of the at least one baffle is separated from the second end by the length of the at least one baffle.

In one example, the at least one baffle is structured and positioned such that bubbles under the first end of the at least one baffle move along the at least one baffle from the first end to the second end of the at least one baffle, and exit the tank at a location at or near the second end of the at least one baffle, for example, through a weir assembly or opening at or near the second end of the at least one baffle.

The at least one baffle may have a width, for example, substantially perpendicular to the length of the at least one baffle, and be bent along its width to form a passage through which at least a portion of the bubbles can pass, for example, from the first end of the at least one baffle, toward the second end of the at least one baffle.

In one example, the tank and the at least one baffle have lengths and the length of the at least one baffle is at least about 50% of the length of the tank. The length of the tank may be equal to or greater than the width of the tank. In one example, the length of the at least one baffle runs or extends along the width of the tank.

The present disclosure is also directed to a method of manufacturing an ophthalmic device, the method comprising the steps of (A) providing a plurality of items selected from cast-molded polymerized ophthalmic devices, or ophthalmic device/mold section combinations, or mold sections, or mold assemblies, or any combination thereof; (B) placing the plurality of items in a liquid in a tank, the tank including at least one element which produces bubbles, or produces convection currents, or produces both in the liquid during use of the tank; (C) providing at least one baffle in the tank, wherein the at least one baffle is at least partially submerged in the liquid in the tank and is effective in preventing at least a portion of the bubbles from contacting the plurality of items located in the liquid in the tank, or is effective in reducing the force with at least a portion of the bubbles or convection currents contact the plurality of items, or is effective in both; (D) treating the plurality of items in the tank to produce treated items; and, thereafter (E) removing the treated items from the tank.

The method of manufacturing an ophthalmic device can be a method wherein a number of acceptable treated items obtained is greater than a number of acceptable items obtained using an identical method in which the at least one baffle is absent from the tank.

The method of manufacturing an ophthalmic device can be a method wherein the plurality of items are present on a support in the tank, and the baffle is effective in at least reducing a number of the plurality of items which are moved relative to their initial position on the support by the bubbles or convection currents or both during the treating.

The method of manufacturing an ophthalmic device can be a method wherein the at least one element comprises a heating element. In one example, the method can be a method wherein an ultrasonic energy element is also present in the tank.

The method of manufacturing an ophthalmic device can be a method wherein, when initially placed in the tank, the plurality of items are ophthalmic device/mold section combinations, each device/mold section combination comprising an ophthalmic device attached to or in contact with a single one of the mold sections used in cast molding the ophthalmic device.

The method of manufacturing an ophthalmic device can be a method wherein the treating is effective to release one or more of the plurality of ophthalmic devices present in the tank from attachment to or contact with the single one of the mold sections used in cast molding the ophthalmic device.

The method of manufacturing an ophthalmic device can be a method wherein the treating comprises washing, or extracting, or hydrating, or applying an additional agent to, or any combination thereof, the ophthalmic devices, or the device/mold section combinations, or the mold sections, or the mold assemblies, or any combination thereof.

The method of manufacturing an ophthalmic device can be a method wherein the ophthalmic device comprises a contact lens, the ophthalmic device/mold section combination comprises a cast molded polymeric contact lens body attached to or in contact with a single one of the mold sections used to cast mold the polymeric contact lens body, and the mold section comprises a contact lens mold section.

The present disclosure is also directed to an apparatus for treatment of a plurality of items, comprising: (A) a tank; (B) a liquid in the tank; (C) a plurality of items selected from ophthalmic devices, or ophthalmic device/mold section combinations, or mold sections, or mold assemblies, or any combination thereof, present in the liquid in the tank; (D) at least one element structured to provide energy to the liquid in the tank, wherein the at least one element produces bubbles, or convection currents, or both in the liquid in the tank during use; and (E) at least one baffle structured and located with respect to the tank and the at least one element (a) to prevent at least a portion of the bubbles in the tank from contacting the plurality of items, or (b) to reduce the force with which at least a portion of the bubbles, or convection currents, or both in the tank contact the plurality of items, or both (a) and (b).

The apparatus can be an apparatus wherein the at least one element comprises at least one heating element. In one example, at least one ultrasonic energy element can also be present in the tank of the apparatus.

The apparatus can be an apparatus further comprising a support or support structure located in the tank and structured to carry the plurality of items.

The apparatus can be an apparatus wherein the at least one baffle is structured and positioned to reduce a number of the plurality of items carried by the support which are moved relative to the support during use.

The apparatus can be an apparatus wherein the at least one baffle is attached to at least one side of the tank.

The apparatus can be an apparatus wherein the at least one baffle comprises two baffles, each of the baffles being attached to an opposing side of the tank.

The apparatus can be an apparatus wherein the at least one baffle is structured and positioned to be effective (a) in preventing at least a portion of the bubbles produced by the at least one element from contacting at least some of the plurality of items in the liquid in the tank; or (b) in redirecting at least a portion of the bubbles to a portion of the tank where no items are located; or (c) in reducing the force with which at least a portion of the bubbles, or convection currents, or both in the tank contact the plurality of items; or any combination of (a) and (b) and (c).

The apparatus can be an apparatus wherein the at least one baffle is positioned in the tank at an acute angle relative of a top surface of the liquid in the tank.

The apparatus can be an apparatus wherein the at least one baffle has a first end located farther below the top surface of the liquid in a tank than a second end of the at least one baffle.

The apparatus can be an apparatus wherein the at least one baffle is structured and positioned such that bubbles under the first end of the at least one baffle move along the at least one baffle from the first end to the second end of the at least one baffle, and exit the tank at a location at or near the second end of the at least one baffle.

The apparatus can be an apparatus wherein the at least one baffle has a width and is bent along its width to form a passage through which at least a portion of the bubbles can pass from the first end of the at least one baffle toward the second end of the at least one baffle.

The apparatus can be an apparatus wherein the ophthalmic device comprises a contact lens, the ophthalmic device/mold section combination comprises a cast molded polymeric contact lens body attached to or in contact with a single one of the mold sections used to cast mold the polymeric contact lens body, and the mold section comprises a contact lens mold section.

Various embodiments and features of the present methods and apparatus systems are described herein. Any combination of features described herein are included within the scope of the present disclosure provided that the features included in any such combination are not mutually inconsistent as will be apparent from the context, this specification, and the knowledge of one of ordinary skill in the art. In addition, any feature or combination of features may be specifically excluded from any embodiment of the present disclosure.

Additional advantages and examples of the present disclosure are apparent in the following detailed description, additional disclosure, claims and drawings in which like parts bear like reference numerals.

### Brief Description of the Drawings

Fig. 1 is a top side view, in perspective of an apparatus in accordance with the present disclosure in use in delensing a plurality of cast-molded polymeric contact lenses from mold sections.
Fig. 2 is a cross-sectional view of the apparatus shown in Fig. 1 taken along the line 2-2 of Fig. 1.
Fig. 3 is a cross-section view of the apparatus shown in Fig. 1 taken along line 3-3 of Fig. 1.

### Detailed Description

In accordance with the present disclosure, methods of manufacturing ophthalmic devices and apparatus for treating ophthalmic devices are provided.

The cast-molded polymeric ophthalmic devices as described herein may be any suitable such devices, for example, contact lenses, intraocular lenses, corneal onlays, corneal inlays and the like. Although the delensing of cast-molded polymeric contact lenses is emphasized herein, it is to be understood that the apparatus and methods described herein may also be applicable to other processes used in the manufacture of any cast-molded ophthalmic device, including cast-molded polymeric lenses, such as intraocular lenses and the like, as well as other lenses used in or on human eyes or animal eyes. The contact lenses which are manufactured in accordance with the present disclosure may be cast-molded polymeric contact lenses, for example, formed by polymerization of a composition containing one or more monomers between contact lens mold sections which may also be molded articles, such as injection molded articles.

For the sake of simplicity and illustrative clarity, the following detailed description will be directed primarily to manufacturing or treating or both manufacturing and treating cast-molded polymeric silicone hydrogel contact lenses, for example, those silicone hydrogel contact lenses formed from a polymerizable composition comprising a formulation based on one or more siloxane-containing monomers, for example, a polysiloxanyl dimethacrylate silicone monomer, or a combination of a polysiloxanyl dimethacrylate silicone monomer and a polydimethylsiloxane methacrylate derivative or a hydrophilic monomer or both. The specific features and conditions, described in specific detail herein, are not to be considered limiting to the scope of the present methods and apparatus, including those found to be favorable to the manufacture of contact lenses, such as silicone hydrogel contact lenses. The lenses may be silicone hydrogel contact lenses that have been manufactured using radiation initiated polymerization of a monomer composition, the radiation being in the form of ultraviolet light or heat, for example.

Examples of polymerizable compositions useful in the manufacture of silicone hydrogel lenses that are described in PCT Publication No. WO2006026474. The polymerizable composition may include, in addition to the siloxane monomeric components, components such as a tint component, or a UV blocker component, or the like, or any combination thereof.

It will be appreciated by persons of ordinary skill in the art that the methods and apparatus in accordance with the disclosure, possibly with appropriate modifications thereto, can be utilized in the manufacture or treatment or both of other types of molded lenses formed from other polymerizable composition formulations, and all such modified methods and apparatus are considered to be within the scope of the present methods and apparatus.

The manufacture of cast molded contact lenses involves a number of steps including, for example, (1) forming contact lens mold sections, for example, using injection molding (or other techniques or combinations of techniques) to produce the desired mold sections; (2) placing a polymerizable composition in a lens-shaped cavity formed between two mold sections to form a mold assembly; (3) subjecting the mold assembly to conditions effective to polymerize the polymerizable composition in the lens-shaped cavity; (4) separating the mold sections of the mold assembly (known as demolding); (5) removing the lens-shaped article from the demolded mold section holding the lens-shaped article (known as delensing); and optionally (6) subjecting the lens-shaped article to further processing, such as washing, or extraction, or hydration, or application of an agent, or any combination thereof, and (7) packaging the lens-shaped article to obtain the final, finished contact lens.

The manufacture of cast molded polymeric contact lenses is described in detail in a number of patents and patent publications. Included among these patents and patent publications are U.S. Patent No. 7,320,587; U.S. Patent No. 7,780,881; U.S. Patent No. 7,731,873; U.S. Patent No. 7,785,092; U.S. Patent Publication 2007-0035049; U.S. Patent No. 8,298,458; U.S. Patent No. 7,319,133; U.S. Patent No. 7,426,993; U.S. Patent No. 7,360,890; U.S. Patent No. 7,750,079; U.S. Patent No. 7,799,249.

In one or more of the steps of the contact lens manufacturing process or method, one or more of the mold assembly, that is an assembly including the lens-shaped article and two mold sections, with the lens-shaped article in a lens-shaped cavity between the two mold sections; or the lens-shaped article attached to a single mold section; or the contact lens itself; or a single mold section; is contacted with a liquid.

The present disclosure provides methods and apparatus which benefit such liquid contacting steps.

For ease of description, the present methods and apparatus are described primarily with regard to a delensing operation in which the lens-shaped article (or contact lens product) is to be released from a single mold section (after the two mold sections have been separated or demolded). However, the present methods and apparatus can be used, and are useful, in other liquid-contacting steps in which the entire mold assembly or only the lens-shaped article (lens) or only a mold section, or any combination thereof, is to be contacted with a liquid.

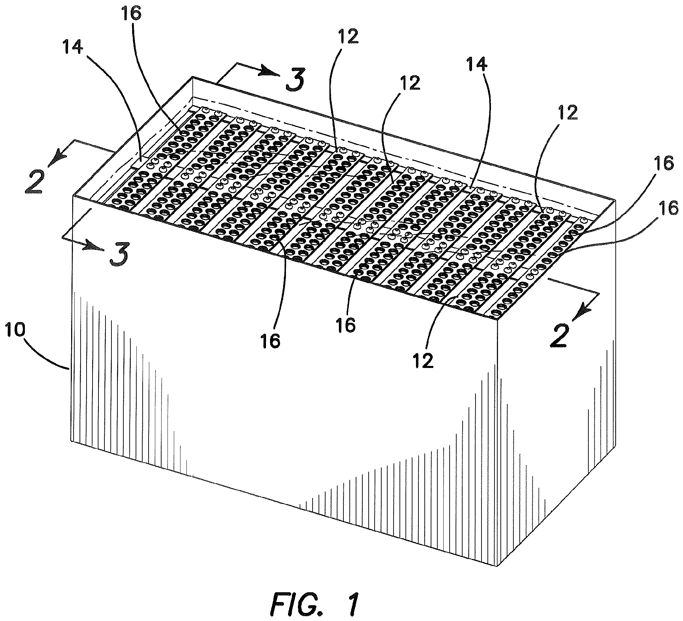

With reference to Fig. 1, tank 10 is shown, and is of a size sufficiently large to process a plurality of cast-molded polymeric ophthalmic device/mold section combinations. Such tanks may be large enough to process about 100 to about 1000 or more such ophthalmic device/mold section combinations at the same time. For example, the tank 10 may have a length in a range of about 30.48 cm (1 foot) to about 365.76 cm (12 feet), a width in a range of about 30.48 cm (1 foot) to about 365.76 cm (12 feet), and a depth in a range of about 5.08 cm (2 inches) to about 121.92 cm (4 feet). In the example illustrated in Figs. 1-3, the tank and the at least one baffle have lengths and the length of the at least one baffle is at least about 50% of the length of the tank.

Tank 10 can be made of any suitable material of construction or combination of such materials of construction. The tank 10 may be made of materials so that the tank does not contaminate the cast molded polymeric ophthalmic devices being processed in the tank or the liquid in the tank. The tank may be made of a material or materials which are resistant to damage, e.g., corrosion, erosion, etc., caused by the presence of the liquid and/or additive (s) in the tank. The tank may be made of materials which do not contaminate or otherwise degrade the liquid in the tank. Examples of materials of construction which may be used for the tank include metals, such as stainless steel and the like; polymeric materials, such as polyethylene, polypropylene and the like; as well as other material or materials of construction which are suitable for use in the present methods and apparatus.

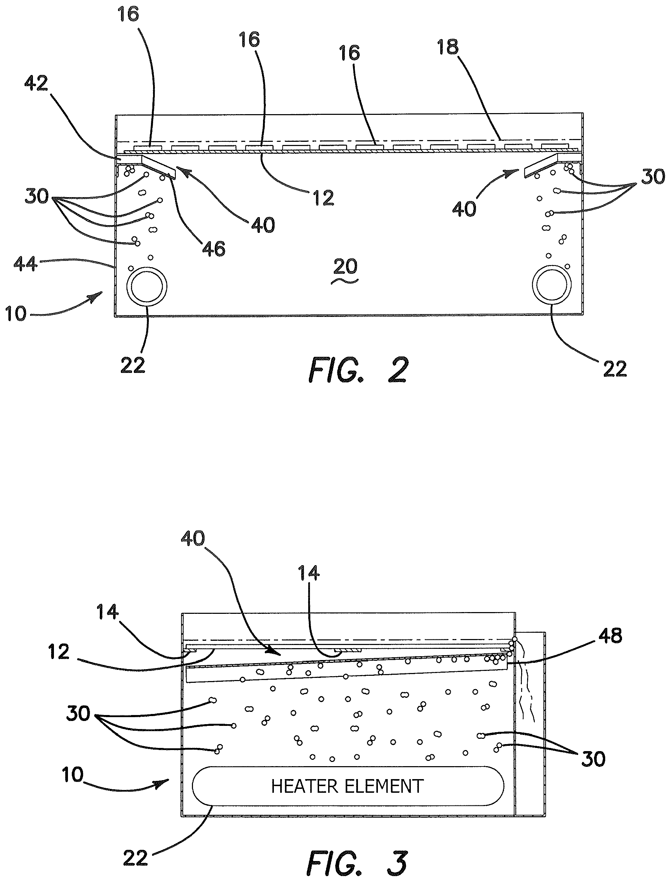

As illustrated in Fig. 1, Tank 10 is equipped with a number of support structures 12 (also see Figs. 2 and 3), each of which is carried on members 14, which are fixed to the tank 10 and extend along the length of the tank 10. In the example illustrated in Fig. 1, the tank 10 is equipped with three (3) members 14, one member 14 extending along the length of tank 10 across the middle of the tank, and one member 14 extending along the length of the tank near each of opposing sides of the tank. The members 14 are positioned in the tank 10, near the open top of the tank. Support structures 12 are provided. Alternatively, the support members 14 can be integral with the support structures 12 (not illustrated). The support structures 12 can be placed on and carried by the members 14 so that the support structures are under the top level or surface of liquid in the tank 10 when the tank is filled with liquid.

The support structures 12 can include a plurality of openings or indents (not shown) each of which is sized to cradle or hold one cast-molded polymeric ophthalmic devices, or one device/mold section combination, or one mold section, or one mold assembly. The openings or indents can include one or more through-holes or supporting screen(s) in order to afford direct contact between the liquid in the tank and the ophthalmic devices or device/mold section combinations or mold sections or mold assemblies present in the indents. The support structure(s) 12 including indents can be placed on and carried by the members 14 so that at least a portion of each device or device/mold section combination or mold section or mold assembly carried by the support structure 12 sits under the top level or surface of liquid in the tank 10 when the tank is filled with liquid.

As shown in Figs. 1 and 2, each of the support structures 12 carries a plurality of cast-molded polymeric ophthalmic device/mold section combinations 16 so that the upper surfaces of the ophthalmic device/mold section combinations are located just below the top surface 18 of the liquid 20 in tank 10. In the present illustration, the ophthalmic device/mold section combinations 16 are cast-molded polymeric silicone hydrogel contact lenses which are attached to or held by a single injection-molded polymeric mold section. Thus, each ophthalmic device/mold section combination 16 includes both a polymeric contact lens product and a single mold section. As illustrated in Figs. 1-3, the purpose of the tank 10 is to facilitate the delensing of the mold section or, in other words, the separation of the contact lens product from the mold section. However, the apparatus illustrated in Figs. 1-3 can be used to perform other treatments on polymerized ophthalmic devices, or on ophthalmic device/mold section combinations, or on individual mold sections, or on mold assemblies, or on any combination thereof.

The support structures 12, with the ophthalmic device/mold section combinations 16 positioned on the support structures, are placed in the tank 10 and are supported or carried by the members 14.

In one example, one or more robots of conventional design and structure are employed, for example, in one or more of the following: placing or removing the ophthalmic devices, or the ophthalmic device/mold section combinations 16, or the mold sections, or the mold assemblies, or any combination thereof, on the support structures 12 either while the support structures 12 are present in the tank or when the support structures have been removed from the tank 10; or placing the support structures 12 into or removing the support structures 12 from the tank (with or without ophthalmic devices, or ophthalmic device/mold section combinations, or mold sections or mold assemblies being present in the support structures 12).

The liquid 20 in the tank 10 can be maintained at a slightly elevated temperature, for example, at a temperature in a range of about 24°C (75°F) to about 38°C (100°F) to enhance the effectiveness of at least facilitating the separation of the ophthalmic devices from the mold sections. Alternatively, the liquid 20 in the tank 10 can be at room temperature or can be chilled.

Although one or more different liquids may be employed in tank 10, the liquid often includes water or may be aqueous based, for example, may include at least about 50% by weight of water. The liquid may be water, for example, deionized water. As noted above, liquids other than water may be employed and such other liquids are included in the scope of the present disclosure. For example, the liquid can comprise an aqueous or organic solution, such as a solution of a treatment agent.

In the example illustrated in Figs. 1-3, in order to maintain the desired temperature of the liquid 20 in tank 10, two heater elements 22 are provided in the tank 10. The heater elements 22 may be of conventional design, and may be electrically powered and controlled to provide an amount of energy that provides/maintains the liquid 20 in the tank 10 at the desired temperature. In another example, one or more ultrasonic energy elements can also be provided in the tank in order to expose the ophthalmic devices, or ophthalmic device/mold section combinations, or mold sections, or mold assemblies, to ultrasonic energy.

One issue that is related to the use of elements such as heater elements 22 in tanks is that they, at least indirectly, can to cause unwanted movement of the ophthalmic devices, or ophthalmic device/mold section combinations 16, or mold sections present in the liquid in the tank when the elements are in use. For example, the operation of the heater elements 22 tends to create bubbles, shown as 30 in Figs. 2 and 3. In addition, the heater elements 22 can create convection currents (not shown) in the liquid 20 when the heater element(s) are operating. Such bubbles 30 or convection currents or both bubbles 30 and convection currents in the liquid 20 in the tank 10 can create enough motion or movement in the water in the tank that the ophthalmic devices, or ophthalmic device/mold section combinations 16, or mold sections, or mold assemblies on the support structures 12 are more likely to move and become lost or damaged. Alternatively, the bubbles can directly impact and cause movement of the ophthalmic devices, or ophthalmic device/mold section combinations 16, or mold sections, or mold assemblies on the support structures 12. Such movement also may cause some difficulty in using robots to remove the ophthalmic devices, ophthalmic device/mold section combinations 16, or mold sections from the tank 10.

It has been found that the certain difficulties caused by the operation of elements such as heater elements 22 can be reduced or even substantially eliminated by using baffles 40 in tank 10, as shown in Figs. 2 and 3.

With reference to Figs. 2 and 3, two baffles 40 are secured to the tank 10. Each baffle 40 is located on an opposing wall of tank 10, and extends across substantially the entire width of the tank. In examples where the support structures 12 do not extend substantially across the entire width of the tank, the baffles similarly can extend across the portion of the tank over which the support structures 12 extend, or across the portion of the tank over which the element (s) 22 extends. The baffles 40 can be structured substantially identically, and are so structured in the example illustrated in Figs. 1-3, so that only one baffle will be described in detail. However, it is to be understood that each baffle functions substantially identically.

Baffle 40 is positioned in tank 10 substantially over heater element 22. As shown in Fig. 3, baffle 40 extends along the width of tank 10 and extends over substantially the entire length of the heater element 22. The size and placement of the baffle 40 relative to the heater element 22 is such that at least a portion or at least about 20% or at least a major amount, that is at least about 50%, or more, of the bubbles 30 produced by heater element 22 do not come in contact with or disrupt the ophthalmic devices, the ophthalmic device/mold section combinations 16, or the mold sections in the tank 10. In addition, the baffle 40 is structured and positioned to disrupt convection currents in the liquid 20 which may occur as a result of the operation of the heater element 22, for example, as a result of the energy produced by the heater element 22. Such convection currents that are present in tank 10 can have reduced force relative to the convection currents that would exist in tank 10 without the presence of the baffle 40.

The baffle 40 is designed to contain or capture or both contain and capture the bubbles 30 and to direct the bubbles out of tank 30, away from the items present in the tank, or to prevent the bubbles from disrupting the items present in the tank, or to both capture and prevent the bubbles from disrupting the items present in the tank in the tank 10, such as, for example, the device/mold section combinations 16.

As shown in Fig. 2, baffle 40 includes a first portion 42 which extends inwardly from, and substantially perpendicular to, sidewall 44 of tank 10. A second portion 46 of baffle 40, which can be larger or longer than first portion 42, extends downwardly into tank 10 relative to first portion 42. The combination of first portion 42 and second portion 46 extends inwardly and downwardly into tank 10 over at least a portion or at least a major portion or substantially all of heater element 22. The shape or configuration and size of the baffle 22 (and first and second portions 42 and 46) provide for capturing at least a portion, for example, a major portion, that is at least about 50%, of the bubbles in the water produced by the action of the heater element 22 before such bubbles can affect, for example, come into contact with, the ophthalmic devices, or the ophthalmic device/mold section combinations 16, or the mold sections, or the mold assemblies in the tank 10.

With reference to Fig. 3, baffle 40 is positioned at a slant relative to horizontal in tank 10. For example, the baffle 40 is positioned at an angle of about 3° to about 20° from horizontal, with the upper end 48 of the baffle 40 being located substantially immediately below a member 14.

The slanting of baffle 40, as noted above, is effective to cause the bubbles 30 to move upward following the contour of the baffle 40 (as shown in Fig. 3) so that at the upper end 48 of the baffle 40 the bubbles escape harmlessly into the atmosphere outside the tank 10, without contacting or otherwise adversely affecting or disrupting the ophthalmic devices, or the ophthalmic device/mold section combinations 16, or the mold sections in tank 10.

While this disclosure describes various specific examples and embodiments, it is to be understood that the methods and apparatus are not limited thereto and that they can be variously practiced within the scope of the following claims.

## Claims

1. A method of manufacturing an ophthalmic device, comprising:
providing a plurality of items selected from cast-molded polymerized ophthalmic devices or ophthalmic device/mold section combinations (16), and any combination thereof;
placing the plurality of items in a liquid (20) in a tank (10);
treating the plurality of items in the tank (10) to produce treated items; and, thereafter removing the treated items from the tank (10);
wherein
the tank (10) includes at least one element which produces bubbles (30), or produces convection currents, or produces both in the liquid (20) during use of the tank (10); and
the ophthalmic devices each comprising a contact lens, the ophthalmic device/mold section combinations each comprising a cast molded polymeric contact lens body attached to or in contact with a single one of the mold sections used to cast mold the polymeric contact lens body; and wherein the method comprises:
providing at least one baffle (40) in the tank (10), wherein the at least one baffle (40) is at least partially submerged in the liquid (20) in the tank (10) and is effective in preventing at least a portion of the bubbles (30) from contacting the plurality of items located in the liquid (20) in the tank (10), or is effective in reducing the force with which at least a portion of the bubbles (30) or convection currents contact the plurality of items, or is effective in both.

2. The method of claim 1 wherein the at least one element comprises a heating element (22).

3. The method of claim 1 or claim 2, wherein, when initially placed in the tank (10), the plurality of items are ophthalmic device/mold section combinations (16), each ophthalmic device/mold section combination (16) comprising an ophthalmic device attached to a single one of the mold sections used in cast molding the ophthalmic device.

4. The method of any one of claims 1-3, wherein the treating comprises at least one of washing the plurality of items, extracting the plurality of items, hydrating the plurality of items, applying an additional agent to the plurality of items and any combination thereof.

5. An apparatus for treatment of a plurality of items, comprising:
a tank (10);
a liquid (20) in the tank (10);
a plurality of items selected from ophthalmic devices or ophthalmic device/mold section combinations (16), and any combination thereof, present in the liquid (20) in the tank (10);
wherein
at least one element is structured to provide energy to the liquid (20) in the tank (10); wherein the at least one element produces bubbles (30), or convection currents, or both in the liquid (20) in the tank (10) during use; and
the ophthalmic devices each comprises a contact lens, the ophthalmic device/mold section combinations each comprises a cast molded polymeric contact lens body attached to or in contact with a single one of the mold sections used to cast mold the polymeric contact lens body; and
the apparatus comprises at least one baffle (40) structured and located with respect to the tank (10) and the at least one element (22) (a) to prevent at least a portion of the bubbles (30) in the tank (10) from contacting the plurality of items (16), or (b) to reduce the force with which at least a portion of the bubbles (30), or convection currents, or both in the tank (10) contact the plurality of items (16), or both (a) and (b).

6. The apparatus of claim 5, wherein the at least one element comprises a heating element (22).

7. The apparatus of claim 5 or 6, further comprising a support located in the tank (10) and structured to carry the plurality of items.

8. The apparatus of any one of claims 5-7, wherein the at least one baffle (40) is attached to at least one side of the tank (10).

9. The apparatus of any one of claims 5-8, wherein the at least one baffle is structured and positioned to be effective in redirecting the bubbles to a portion of the tank where none of the plurality of items are located.

10. The apparatus of any one of claims 5-9, wherein the at least one baffle (40) is positioned in the tank (10) at an acute angle relative of a top surface of the liquid (20) in the tank.

11. The apparatus of claim 10, wherein the at least one baffle (40) has a first end located farther below the top surface of the liquid (20) in a tank (10) than a second end of the at least one baffle (40).

12. The apparatus of claim 11, wherein the at least one baffle (40) is structured and positioned such that bubbles (30) under the first end of the at least one baffle (40) move along the at least one baffle (40) from the first end to the second end of the at least one baffle (40), and exit the tank (10) at a location at or near the second end of the at least one baffle (40) .

## Patentansprüche

1. Verfahren zur Herstellung einer ophthalmischen Vorrichtung, umfassend:
Bereitstellen einer Vielzahl von Gegenständen, ausgewählt aus gussgeformten, polymerisierten ophthalmischen Vorrichtungen oder Kombinationen (16) aus ophthalmischer Vorrichtung/Formabschnitt und jeder Kombination davon;
Platzieren der Vielzahl von Gegenständen in einer Flüssigkeit (20) in einem Tank (10);
Behandeln der Vielzahl von Gegenständen in dem Tank (10), um behandelte Gegenstände herzustellen; und danach
Entfernen der behandelten Gegenstände aus dem Tank (10);
wobei
der Tank (10) mindestens ein Element enthält, das während der Verwendung des Tanks (10) in der Flüssigkeit (20) Blasen (30) erzeugt oder Konvektionsströmungen erzeugt oder beides erzeugt; und
die ophthalmischen Vorrichtungen jeweils eine Kontaktlinse umfassen, wobei die Kombinationen aus ophthalmischer Vorrichtung/Formabschnitt jeweils einen gussgeformten polymeren Kontaktlinsenkörper umfassen, der an einem einzelnen der Formabschnitte angebracht ist oder mit diesem in Kontakt steht, der zum Gießformen des polymeren Kontaktlinsenkörpers verwendet wird; und wobei das Verfahren umfasst:
Bereitstellen mindestens eines Leitblechs (40) in dem Tank (10), wobei das mindestens eine Leitblech (40) zumindest teilweise in die Flüssigkeit (20) in dem Tank (10) eingetaucht ist und wirksam ist, zumindest einen Teil der Blasen (30) daran zu hindern, die Vielzahl von Gegenständen zu kontaktieren, die sich in der Flüssigkeit (20) in dem Tank (10) befinden, oder wirksam ist, um die Kraft zu verringern, mit der zumindest ein Teil der Blasen (30) oder Konvektionsströme die Vielzahl von Gegenständen kontaktiert oder in beiden wirksam ist.

2. Verfahren nach Anspruch 1, wobei das mindestens eine Element ein Heizelement (22) umfasst.

3. Verfahren nach Anspruch 1 oder Anspruch 2, wobei, wenn sie anfänglich in dem Tank (10) platziert werden, die Vielzahl von Gegenständen Kombinationen (16) aus ophthalmischer Vorrichtung/Formabschnitt sind, wobei jede Kombination (16) aus ophthalmischer Vorrichtung/Formabschnitt eine ophthalmologische Vorrichtung umfasst, die an einem einzelnen der beim Gießformen der ophthalmischen Vorrichtung verwendeten Formabschnitte angebracht ist.

4. Verfahren nach einem der Ansprüche 1 bis 3, wobei das Behandeln mindestens eines von Waschen der Vielzahl von Gegenständen, Extrahieren der Vielzahl von Gegenständen, Hydratisieren der Vielzahl von Gegenständen, Auftragen eines zusätzlichen Mittels auf die Vielzahl von Gegenständen sowie jede Kombination davon umfasst.

5. Vorrichtung zur Behandlung einer Vielzahl von Gegenständen, umfassend:
einen Tank (10);
eine Flüssigkeit (20) im Tank (10);
eine Vielzahl von Gegenständen, ausgewählt aus ophthalmischen Vorrichtungen oder Kombinationen (16) aus ophthalmischer Vorrichtung/Formabschnitt und jeder Kombination davon, die in der Flüssigkeit (20) in dem Tank (10) vorhanden sind;
wobei
mindestens ein Element so strukturiert ist, dass es der Flüssigkeit (20) in dem Tank (10) Energie zuführt; wobei das mindestens eine Element während der Verwendung Blasen (30) oder Konvektionsströmungen oder beides in der Flüssigkeit (20) in dem Tank (10) erzeugt; und
die ophthalmologischen Vorrichtungen jeweils eine Kontaktlinse umfassen, die Kombinationen aus ophthalmischer Vorrichtung und Formabschnitt jeweils einen gussgeformten polymeren Kontaktlinsenkörper umfassen, der an einem einzelnen der Formabschnitte angebracht ist oder mit diesem in Kontakt steht, der zum Gießformen des polymeren Kontaktlinsenkörpers verwendet wird; und
die Vorrichtung mindestens ein Leitblech (40) umfasst, das in Bezug auf den Tank (10) und das mindestens eine Element (22) strukturiert und angeordnet ist, um (a) mindestens einen Teil der Blasen (30) in dem Tank (10) daran zu hindern, die Vielzahl von Gegenständen (16) zu kontaktieren, oder (b) die Kraft zu verringern, mit der zumindest ein Teil der Blasen (30) oder Konvektionsströme oder beides in dem Tank (10) die Vielzahl von Gegenständen (16) kontaktiert, oder sowohl (a) als auch (b).

6. Vorrichtung nach Anspruch 5, wobei das mindestens eine Element ein Heizelement (22) umfasst.

7. Vorrichtung nach Anspruch 5 oder 6, ferner umfassend eine Stütze, die sich in dem Tank (10) befindet und strukturiert ist, um die Vielzahl von Gegenständen zu tragen.

8. Vorrichtung nach einem der Ansprüche 5 bis 7, wobei das mindestens eine Leitblech (40) an mindestens einer Seite des Tanks (10) angebracht ist.

9. Vorrichtung nach einem der Ansprüche 5 bis 8, wobei das mindestens eine Leitblech so strukturiert und positioniert ist, dass es beim Umlenken der Blasen zu einem Abschnitt des Tanks wirksam ist, wo sich keine der Vielzahl von Gegenständen befinden.

10. Vorrichtung nach einem der Ansprüche 5 bis 9, wobei das mindestens eine Leitblech (40) in dem Tank (10) in einem spitzen Winkel relativ zu einer oberen Oberfläche der Flüssigkeit (20) in dem Tank angeordnet ist.

11. Vorrichtung nach Anspruch 10, wobei das mindestens eine Leitblech (40) ein erstes Ende aufweist, das weiter unter der oberen Oberfläche der Flüssigkeit (20) in einem Tank (10) angeordnet ist als ein zweites Ende des mindestens einen Leitblechs (40).

12. Vorrichtung nach Anspruch 11, wobei das mindestens eine Leitblech (40) so strukturiert und positioniert ist, dass sich Blasen (30) unter dem ersten Ende des mindestens einen Leitblechs (40) entlang des mindestens einen Leitblechs (40) vom ersten Ende zum zweiten Ende des mindestens einen Leitblechs (40) bewegen und den Tank (10) an einer Stelle am oder nahe dem zweiten Ende des mindestens einen Leitblechs (40) verlassen.

## Revendications

1. Procédé de fabrication d'un dispositif ophtalmique, comprenant :
la fourniture d'une pluralité d'articles sélectionnés parmi des dispositifs ophtalmiques polymérisés moulés par coulée ou des combinaisons de dispositif ophtalmique/section de moule (16), et toute combinaison de ceux-ci ;
le placement de la pluralité d'article dans un liquide (20) dans un réservoir (10) ;
le traitement de la pluralité d'articles dans le réservoir (10) pour produire des articles traités ; puis le retrait des articles traités du réservoir (10) ;
dans lequel
le réservoir (10) comporte au moins un élément qui produit des bulles (30), ou produit des courants de convection, ou produit les deux dans le liquide (20) au cours d'une utilisation du réservoir (10) ; et
les dispositifs ophtalmiques comprenant chacun une lentille de contact, les combinaisons de dispositif ophtalmique/section de moule comprenant chacune un corps de lentille de contact polymère moulé par coulée fixé à ou en contact avec une seule des sections de moule utilisées pour mouler par coulée le corps de lentille de contact polymère ; et dans lequel le procédé comprend :
la fourniture d'au moins un déflecteur (40) dans le réservoir (10), dans lequel l'au moins un déflecteur (40) est au moins partiellement immergé dans le liquide (20) dans le réservoir (10) et est efficace pour empêcher au moins une partie des bulles (30) de venir au contact de la pluralité d'articles situés dans le liquide (20) dans le réservoir (10), ou est efficace pour réduire la force avec laquelle au moins une partie des bulles (30) ou des courants de convection viennent au contact de la pluralité d'articles, ou est efficace pour les deux.

2. Procédé selon la revendication 1, dans lequel l'au moins un élément comprend un élément chauffant (22).

3. Procédé selon la revendication 1 ou 2, dans lequel, lorsqu'ils sont initialement placés dans le réservoir (10), la pluralité d'articles sont des combinaisons de dispositif ophtalmique/section de moule (16), chaque combinaison de dispositif ophtalmique/section de moule (16) comprenant un dispositif ophtalmique fixé à une seule des sections de moule utilisées dans le moulage par coulée du dispositif ophtalmique.

4. Procédé selon l'une quelconque des revendications 1 à 3, dans lequel le traitement comprend au moins l'un parmi le lavage de la pluralité d'articles, l'extraction de la pluralité d'articles, l'hydratation de la pluralité d'articles, l'application d'un agent supplémentaire à la pluralité d'articles et toute combinaison de ceux-ci.

5. Appareil de traitement d'une pluralité d'articles, comprenant :
un réservoir (10) ;
un liquide (20) dans le réservoir (10) ;
une pluralité d'articles sélectionnés parmi des dispositifs ophtalmiques ou des combinaisons de dispositif ophtalmique/section de moule (16), et toute combinaison de ceux-ci, présents dans le liquide (20) dans le réservoir (10) ;
dans lequel
au moins un élément est structuré pour fournir une énergie au liquide (20) dans le réservoir (10) ; dans lequel l'au moins un élément produit des bulles (30), ou des courants de convection, ou les deux dans le liquide (20) dans le réservoir (10) au cours de son utilisation ; et
les dispositifs ophtalmiques comprennent chacun une lentille de contact, les combinaisons de dispositif ophtalmique/section de moule comprennent chacune un corps de lentille de contact polymère moulé par coulée fixé à ou en contact avec une seule des sections de moule utilisées pour mouler par coulée le corps de lentille de contact polymère ; et
l'appareil comprend au moins un déflecteur (40) structuré et situé par rapport au réservoir (10) et à l'au moins un élément (22) (a) pour empêcher au moins une partie des bulles (30) dans le réservoir (10) de venir au contact de la pluralité d'articles (16), ou (b) pour réduire la force avec laquelle au moins une partie des bulles (30), ou des courants de convection, ou les deux dans le réservoir (10) viennent au contact de la pluralité d'articles (16), ou à la fois (a) et (b).

6. Appareil selon la revendication 5, dans lequel l'au moins un élément comprend un élément chauffant (22).

7. Appareil selon la revendication 5 ou 6, comprenant en outre un support situé dans le réservoir (10) et structuré pour porter la pluralité d'articles.

8. Appareil selon l'une quelconque des revendications 5 à 7, dans lequel l'au moins un déflecteur (40) est fixé à au moins un côté du réservoir (10).

9. Appareil selon l'une quelconque des revendications 5 à 8, dans lequel l'au moins un déflecteur est structuré et positionné pour être efficace pour rediriger les bulles vers une partie du réservoir où aucun de la pluralité d'articles ne se trouve.

10. Appareil selon l'une quelconque des revendications 5 à 9, dans lequel l'au moins un déflecteur (40) est positionné dans le réservoir (10) à un angle aigu par rapport à une surface supérieure du liquide (20) dans le réservoir.

11. Appareil selon la revendication 10, dans lequel l'au moins un déflecteur (40) présente une première extrémité située plus loin au-dessous de la surface supérieure du liquide (20) dans un réservoir (10) qu'une deuxième extrémité de l'au moins un déflecteur (40).

12. Appareil selon la revendication 11, dans lequel l'au moins un déflecteur (40) est structuré et positionné de sorte que des bulles (30) au-dessous de la première extrémité de l'au moins un déflecteur (40) se déplacent le long de l'au moins un déflecteur (40) depuis la première extrémité jusqu'à la deuxième extrémité de l'au moins un déflecteur (40), et sortent du réservoir (10) à un emplacement au niveau ou à proximité de la deuxième extrémité de l'au moins un déflecteur (40).
